# EUROPEAN PATENT APPLICATION

(11) **EP 2 448 295 A1**
(43) Date of publication of application: **02.05.2012**
(21) Application number: 10809457.4
(22) Date of filing: 30.03.2010
(51) Int. Cl.: H04W 4/16, H04W 8/00, H04W 88/02

(54) **METHOD AND SYSTEM FOR IMPLEMENTING CELL PHONE SERVICE**

(30) Priority: 21.08.2009 CN 200910163064
(71) Applicant: Huawei Technologies Co., Ltd., Guangdong 518129 (CN)
(72) Inventor: LI, Shiqian, Shenzhen Guangdong 518129 (CN)
(74) Representative: Pfenning, Meinig & Partner GbR
(86) International application number: PCT/CN2010/071400
(87) International publication number: WO 2011/020324

(57) **Abstract**

The present invention relates to the field of communications. A method and system for implementing cell phone services are provided, which are capable of reducing the management cost and the management difficulty of cards and numbers of operators. The method for implementing cell phone services includes: storing a number in a first user data management entity; storing a mobile station identification number corresponding to the number in a second user data management entity; storing routing information of the first user data management entity in the second user data management entity; receiving, by the second user data management entity, request information from a visited network device; and forwarding, by the second user data management entity, the request information to the first user data management entity according to the stored routing information of the first user data management entity.

## Description

The application claims priority to Chinese Patent Application No. 200910163064.2, filed with the Chinese Patent Office on August 21, 2009 and entitled "METHOD AND SYSTEM FOR IMPLEMENTING CELL PHONE SERVICES", which is incorporated herein by reference in its entirety.

### FIELD OF THE INVENTION

The present invention relates to the field of communications, and in particular, to a method and a system for implementing cell phone services.

### BACKGROUND OF THE INVENTION

With development and popularization of mobile communications, people's desire to select a Directory Number (DN) gets more and more strong, and operators gradually consider the service as an important one in the quality of service. From a technical point of view, a Home Location Register (HLR) has administration over an International Mobile Station Identity (IMSI) and a DN of specific numbers, that is, a user in the HLR must have a number of which the IMSI and the DN are under the administration of the HLR.

When the user buys a cell phone number or changes a Subscriber Identity Module (SIM) card or a User Identity Model (UIM) card, the cell phone number and the SIM card or the UIM card must belong to the same HLR.

Therefore, in one city, or one local network, or one country without long distance and roaming charges, multiple HLRs exist, when a user buys a number or changes a card, the operator needs to find out an SIM card or a UIM card belonging to the same HLR as the DN, because the SIM card or the UIM card stores the IMSI, so that each business hall of the operator needs to reserve the SIM cards or the UIM cards of the HLRs.

In the procedure of number allocation of the operator, the inventor finds that the prior art at least has the following problem.

If the business halls of the operator reserve the SIM cards or the UIM cards of the HLRs, the management cost and the management difficulty of the number allocation of the operator are increased.

### SUMMARY OF THE INVENTION

Embodiments of the present invention provide a method and a system for implementing cell phone services, so that business halls of an operator do not need to reserve SIM cards or UIM cards of HLRs any longer, thereby reducing management cost and management difficulty.

For the above objectives, the present invention adopts the following technical solutions.

A method for implementing cell phone services is provided, where the method includes: storing a number in a first user data management entity; storing a mobile station identification number corresponding to the number in a second user data management entity; and storing routing information of the first user data management entity in the second user data management entity;
receiving, by the second user data management entity, request information from a visited network device; and
forwarding, by the second user data management entity, the request information to the first user data management entity according to the stored routing information of the first user data management entity.

A method for implementing cell phone services is provided, where the method includes: storing a number in a first user data management entity; storing a mobile station identification number corresponding to the number in a second user data management entity; and storing routing information of the first user data management entity in the second user data management entity;
receiving, by the first user data management entity, a service request from a service function entity; and
sending, by the first user data management entity, a feedback message of the service request to the service function entity, so that the service function entity and a visited network device communicate with each other for implementing services.

A communication system is provided, where the system includes:
a first user data management entity, configured to store a number; and
a second user data management entity, configured to store a mobile station identification number corresponding to the number, and routing information of the first user data management entity.

In the embodiments of the present invention, a method and a system for implementing cell phone services are provided, in which a number is stored in a first user data management entity, a mobile station identification number corresponding to the number is stored in a second user data management entity, routing information of a first user data management entity is stored in the second user data management entity, and all service functions of the current cell phones can be realized. In this way, a tight coupling relationship between a card and a number is unlocked, and business halls of an operator need not reserve SIM cards or UIM cards of user data management entities any longer, thereby reducing management cost and management difficulty.

### BRIEF DESCRIPTION OF THE DRAWINGS

To illustrate the technical solutions according to the embodiments of the present invention or in the prior art more clearly, the accompanying drawings required for describing the embodiments or the prior art are introduced below briefly. Apparently, the accompanying drawings in the following descriptions merely show some of the embodiments of the present invention, and persons of ordinary skill in the art can obtain other drawings according to the accompanying drawings without creative efforts.
FIG. 1 is a block flow chart of a method for implementing cell phone services according to an embodiment of the present invention;
FIG. 2 is a schematic diagram of a location update method according to an embodiment of the present invention;
FIG. 3 is a schematic diagram of a method for querying a situation of HLRs by a Gateway General Packet Radio Service (GPRS) Support Node (GGSN) according to an embodiment of the present invention;
FIG. 4 is another block flow chart of a method for implementing cell phone services according to an embodiment of the present invention;
FIG. 5 is a schematic flow chart of an authentication method according to an embodiment of the present invention;
FIG. 6 is another block flow chart of a method for implementing cell phone services according to an embodiment of the present invention;
FIG. 7 is a schematic diagram of a calling method according to an embodiment of the present invention;
FIG. 8 is a schematic diagram of delivering a short message according to an embodiment of the present invention; and
FIG. 9 is a block structure diagram of a communication system according to an embodiment of the present invention.

### DETAILED DESCRIPTION OF THE EMBODIMENTS

The technical solutions of the embodiments of the present invention are completely described below clearly with reference to the accompanying drawings. Apparently, the embodiments in the following descriptions are merely a part of the embodiments of the present invention, rather than all the embodiments of the present invention. Persons of ordinary skill in the art can derive other embodiments based on the embodiments of the present invention without creative efforts, which all fall within the protection scope of the present invention.

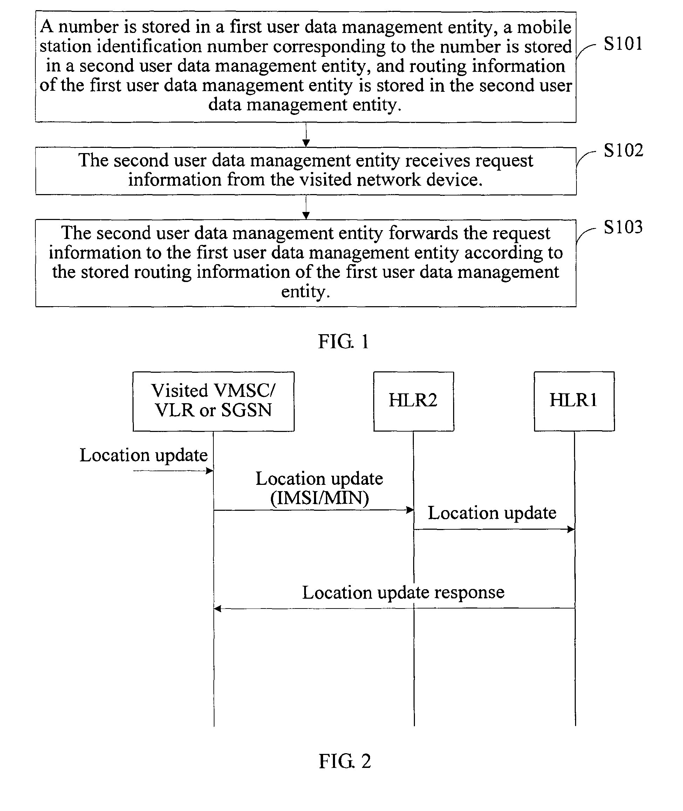

An embodiment of the present invention provides a method for implementing cell phone services, as shown in FIG. 1. The method includes the following steps.

Step S101: A number is stored in a first user data management entity, a mobile station identification number corresponding to the number is stored in a second user data management entity, and routing information of the first user data management entity is stored in the second user data management entity.

The user data management entity in the embodiment of the present invention may be an HLR or a Home Subscriber Server (HSS) in practice, and in this embodiment, an HLR is taken as an example for illustration, that is, the first user data management entity is a first HLR (HLR1), and the second user data management entity is a second HLR (HLR2).

The "A number is stored in a first user data management entity" may be storing an Mobile Station International Integrated Services Digital Network (ISDN) Number (MSISDN) or a Mobile Directory Number (MDN) in the HLR1, that is, reserving subscription information of the user in the HLR1, and moreover, the HLR1 may also save a mapping relationship between the MSISDN or the MDN and an IMSI or a Mobile Identity Number (MIN) stored in the HLR2.

The "a mobile station identification number corresponding to the number is stored in a second user data management entity" may be filling an IMSI or an MIN with the IMSI or the MIN of the HLR2, that is, the input IMSI or MIN is under administration of the HLR2.

The "routing information of the first user data management entity is stored in the second user data management entity" may be storing in the HLR2 a user number or an HLR1 address or an IMSI under the administration of the HLR1 with which routing to the HLR1 may be performed. Messages routed according to the user number are routed to the HLR1 following the prior art, and are processed following the prior art; and messages routed according to the IMSI are routed to the HLR2 following the prior art, except that a small number of messages are processed by the HLR2, the other messages are forwarded by the HLR2 to the home HLR1 of the user number corresponding to the mobile station identification number, for example, authentication is processed by the HLR2, and the others are forwarded to the HLR1, and herein, the forwarding only requires the HLR2 to replace a destination address of the received message with the routing information stored in the HLR2 and of the home HLR1 of the user number corresponding to the IMSI.

Step S102: The second user data management entity (HLR2) receives request information from a visited network device. The request information may be location update request information, other unstructured supplementary data service request information, and packet called service request information.

Specifically, the visited network device may be a Visited Mobile Switching Center (VMSC) or a Visitor Location Register (VLR), or a Service GPRS Supporting Node (SGSN), and a GGSN in practice.

Step S103: The second user data management entity (HLR2) forwards the request information to the first user data management entity (HLR1) according to the stored routing information of the first user data management entity (HLR1).

Specifically, after getting an SIM card or a UIM card according to the embodiment of the present invention, the user inserts the card into a phone and powers on the phone for using, as shown in FIG. 2, a network side receives a power-on location update message of the user, according to the prior art, the visited VMSC or VLR or SGSN initiates a location update request to the HLR2 according to the IMSI or the MIN. After receiving the location update request, the HLR2 forwards the location update request to the HLR1 according to the stored routing information of the HLR1, such as the MSISDN of the HLR1, of the number, in which destination address information in the message is filled with the routing information of the HLR1, for example, a called GT is filled with the MSISDN of the HLR1. The HLR1 receives the forwarded location update request message, processes the message following the process in the prior art, and then returns a location update response to the visited VMSC or VLR or SGSN.

In addition, when the HLR2 forwards a message to the HLR1, two processing methods may be adopted. According to a first method, the HLR2 does not change source address information and session information, as shown in FIG. 2, so that the HLR1 cannot sense that the message is forwarded by the HLR2, and the response message of the HLR1 is directly sent to the MSC or VLR1 or SGSN; according to a second method, the HLR2 reserves a session with the MSC or VLR1 or SGSN, and re-initiates a session with the HLR1, so that the response message of the HLR1 is sent to the HLR2, and then forwarded to the MSC or VLR1 or SGSN1 by the HLR2, so that the HLR2 needs to associate the two sessions, resulting in wastes in the session resource of the HLR2. Meanwhile, the reliability of the network of the second method is not as good as that of the first method; therefore, the first method is taken as an example for illustration.

In this embodiment, the location update request information is taken as an example for illustration, and in practice, the request information may be other unstructured supplementary data service request information and packet called service request information.

Therefore, the mobile station identification number and the number are stored in two HLRs separately, unlocking the tight coupling relationship between the card and the number, so that business halls of an operator need not reserve the SIM cards or the UIM cards of the user data management entities any longer, thereby reducing management cost and management difficulty without affecting the implementation of services such as location update.

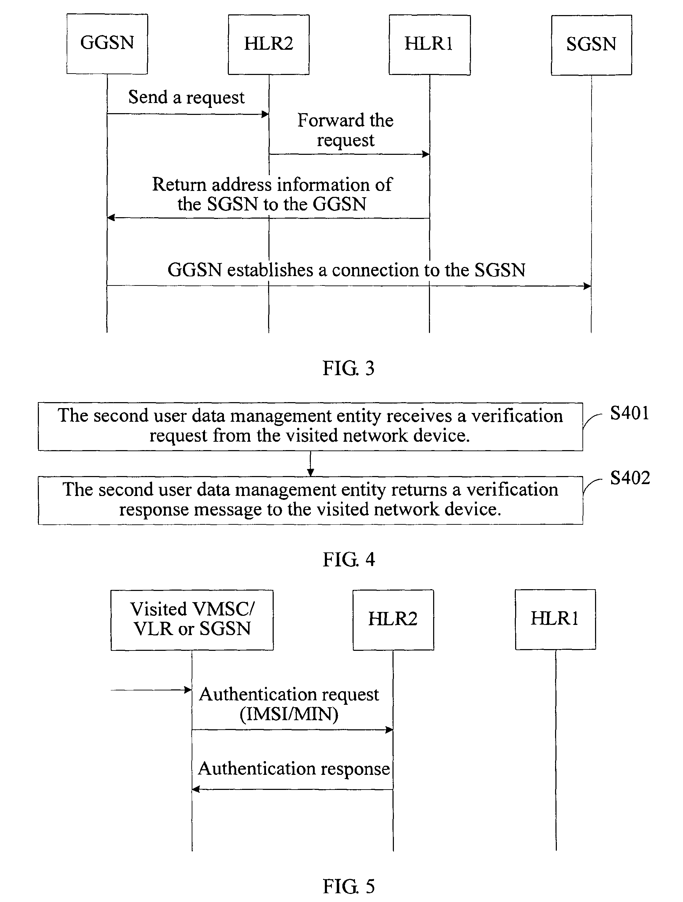

In another embodiment of the present invention, as shown in FIG. 3, a GGSN intends to query the situation of HLRs. As the GGSN uses an IMSI for routing, an HLR2 is first routed to, that is, the HLR2 receives request information from the GGSN. Next, the HLR2 forwards the request information to an HLR1 according to the stored routing information of the HLR1, so that the HLR1 returns a response message to the GGSN. Then, after receiving the request information, the HLR1 may directly return address information of a visited SGSN to the GGSN, and finally, the GGSN establishes a connection to the SGSN.

It can be seen that, after the mobile station identification number and the number are stored in two HLRs separately, the implementation process of the GGSN querying the situation of the HLRs is not affected.

Furthermore, as shown in FIG. 4, before step S102, the method may further include the following steps.

Step S401: The second user data management entity (HLR2) receives a verification request from the visited network device. In this embodiment, the verification request may be an authentication request.

Step S402: The second user data management entity (HLR2) returns a verification response message to the visited network device.

Specifically, after getting the SIM card or the UIM card according to the embodiment of the present invention, the user inserts the card into the phone and powers on the phone for using, as shown in FIG. 5, as the card is a card in the HLR2, a VMSC or a VLR or an SGSN sends an authentication request to the HLR2 according to the IMSI or the MIN; and the HLR2 returns an authentication response to the visited VMSC or VLR or SGSN. In the authentication procedure, the HLR1 is not involved.

Therefore, although the mobile station identification number and the number are stored in two HLRs separately, the authentication on the card of the system is not affected.

It should be noted that, in this embodiment, an authentication request is taken as an example for illustration, but the present invention is not limited thereto, and other requests are also applicable.

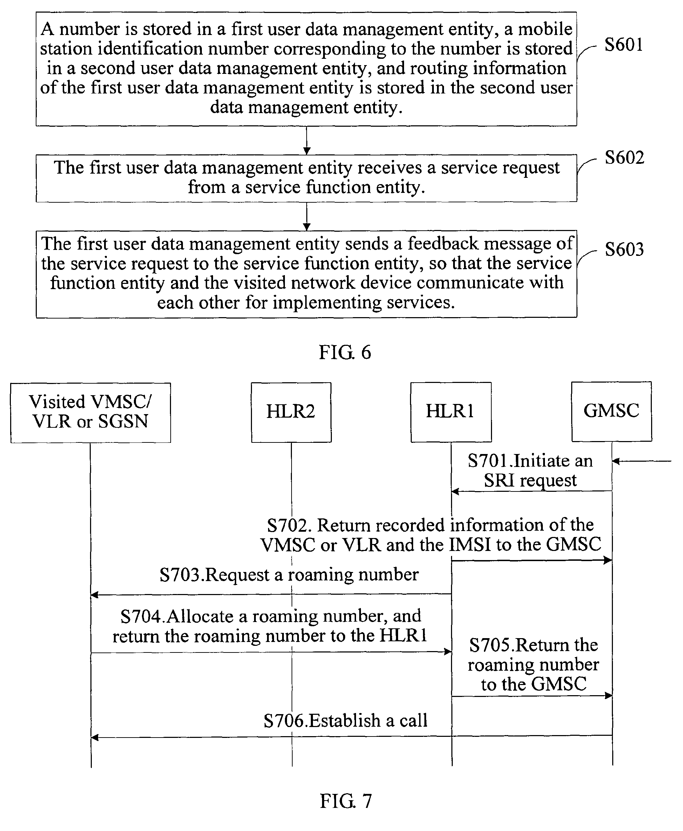

An embodiment of the present invention provides a method for implementing cell phone services, as shown in FIG. 6. The method includes the following steps.

Step S601: A number is stored in a first user data management entity, a mobile station identification number corresponding to the number is stored in a second user data management entity, and routing information of the first user data management entity is stored in the second user data management entity.

Specifically, same as the foregoing embodiment, the user data management entity in this embodiment may be an HLR or an HSS in practice, and in this embodiment, an HLR is taken as an example for illustration, that is, a first user data management entity is a first HLR (HLR1), and a second user data management entity is a second HLR (HLR2).

The "A number is stored in a first user data management entity" may be storing an MSISDN or an MDN in the HLR1, that is, reserving subscription information of the user in the HLR1, and moreover, the HLR1 may also save a mapping relationship between the MSISDN or the MDN and an IMSI or an MIN stored in the HLR2.

The "a mobile station identification number corresponding to the number is stored in a second user data management entity" may be filling an IMSI or an MIN with an IMSI or an MIN of the HLR2, that is, the input IMSI or MIN is under the administration of the HLR2.

The "routing information of the first user data management entity is stored in the second user data management entity" may be storing in the HLR2 a user number or an HLR1 address or an IMSI under the administration of the HLR1 with which routing to the HLR1 may be performed. Messages routed according to the user number are routed to the HLR1 following the prior art, and are processed following the prior art; messages routed according to the IMSI are routed to the HLR2 following the prior art, except that a small number of messages are processed by the HLR2, the other messages are forwarded by the HLR2 to the home HLR1 of the user number corresponding to the mobile station identification number, for example, authentication is processed by the HLR2, and the others are forwarded to the HLR1, and herein, the forwarding only requires the HLR2 to replace a destination address of the received message with the routing information stored in the HLR2 and of the home HLR1 of the user number corresponding to the IMSI.

Step S602: The first user data management entity (HLR1) receives a service request from a service function entity.

Step S603: The first user data management entity (HLR1) sends a feedback message of the service request to the service function entity, so that the service function entity and the visited network device communicate with each other for implementing services.

Specifically, it is assumed that the service request is a call request sent by a Gateway Mobile-services Switching Center (GMSC). As shown in FIG. 7, the method includes the following steps.

Step S701: The GMSC initiates a Send Routing Information (SRI) request to the HLR1 stored in the MSISDN according to a received called number, that is, the MSISDN.

Step S702: The HLR1 returns recorded information of the visited VMSC or VLR and the IMSI of the user to the GMSC.

Step S703: The HLR1 requests a roaming number (Provide Roaming Number, PRN) from the VMSC or VLR according to the recorded information of the currently visited VMSC or VLR.

Step S704: After receiving the PRN request, the visited VMSC or VLR allocates a roaming number (Mobile Station Roaming Number, MSRN), and returns the MSRN to the HLR1.

Step S705: The HLR1 receives the MSRN and returns the MSRN to the GMSC.

Step S706: The GMSC establishes a call to the visited VMSC or VLR according to the MSRN.

The visited VMSC or VLR is called and put through, and the HLR2 is not involved in the whole procedure.

Therefore, although the mobile station identification number and the number are stored in two HLRs separately, the called procedure of the user is not affected.

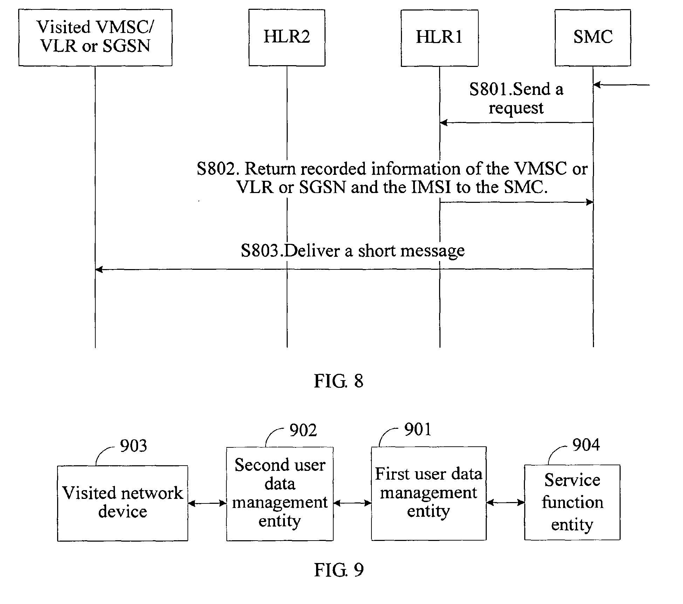

It is assumed that the service request is a short message request sent by a Short Message Center (SMC). As shown in FIG. 8, the method includes the following steps.

Step S801: The SMC sends information of a request of visiting a visited VMSC or VLR or SGSN to a home HLR1 according to an MSISDN.

Step S802: The HLR1 returns recorded information of the visited VMSC or VLR or SGSN and an IMSI of a user to the SMC.

Step S803: The SMC delivers a short message of the user with the IMSI as user identification information and with the visited VMSC or VLR or SGSN as a destination address.

The HLR2 is not involved in the whole procedure.

Therefore, although the mobile station identification number and the number are stored in two HLRs separately, the short message delivery procedure is not affected.

In addition, the service request may also be a packet data request, that is, the HLR1 receives a packet data service request from a service function entity. Next, the HLR1 sends recorded information of a visited network device to the service function entity, so that the service function entity establishes a data connection to the visited network device.

Similarly, although the mobile station identification number and the number are stored in two HLRs separately, the packet data service procedure is not affected.

In the embodiments of the present invention, only several situations are exemplified for illustration, but the present invention is not limited thereto, and other messages can also be processed, and the processing principle is as follows.

As for the messages routed according to the user number MSISDN, the HLR2 is not involved, and the processing is as the same as the processing in the prior art; as for the messages routed according to the IMSI, the messages are all first routed to the HLR2, only a small number of messages required to be processed by the HLR2 are processed by the HLR2, which messages are processed may be determined by the operator according to requirements, and the other messages are forwarded to the HLR1 and are processed by the HLR1.

An embodiment of the present invention provides a communication system, as shown in FIG. 9. The system includes:
a first user data management entity 901, configured to store a number; and
a second user data management entity 902, configured to store a mobile station identification number corresponding to the number, and routing information of the first user data management entity.

Specifically, the user data management entities 901 and 902 may be HLRs or HSSs in practice.

The first user data management entity 901 is configured to store the number, and may store an MSISDN or an MDN in an HLR1, that is, subscription information of a user is reserved in the HLR1, and in addition, the HLR1 may also save a mapping relationship between the MSISDN or the MDN and the IMSI or the MIN stored in the HLR2.

The second user data management entity 902 is configured to store the mobile station identification number corresponding to the number and the routing information of the first user data management entity may fill an IMSI or an MIN with the IMSI or the MIN of the HLR2, that is, the input IMSI or MIN is under the administration of the HLR2. Moreover, the HLR2 stores a user number or an HLR1 address or an IMSI under the administration of the HLR1 with which routing to the HLR1 may be performed. Messages routed according to the user number are routed to the HLR1 following the prior art, and are processed following the prior art; messages routed according to the IMSI are routed to the HLR2 following the prior art, except that a small number of messages are processed by the HLR2, the other messages are forwarded by the HLR2 to the home HLR1 of the user number corresponding to the mobile station identification number, for example, authentication is processed by the HLR2, and the others are forwarded to the HLR1, and herein, the forwarding only requires the HLR2 to replace a destination address of the received message with the routing information stored in the HLR2 and of the home HLR1 of the user number corresponding to the IMSI.

Furthermore, the second user data management entity 902 is further configured to receive a verification request sent by a visited network device 903, and return a verification response message to the visited network device 903.

The verification request may be an authentication request. The visited network device 903 may be a visited VMSC or VLR or SGSN.

Furthermore, the second user data management entity 902 is further configured to receive request information sent by the visited network device 903, and forward the request information to the first user data management entity 901 according to the stored routing information of the first user data management entity 901. Herein, the request information may include location update request information or other unstructured supplementary data service information.

The first user data management entity 901 is further configured to receive the request information, and return a response message to the visited network device 903 or the second user data management entity 902.

Moreover, the first user data management entity 901 is further configured to receive a service request sent by a service function entity 904, and send a feedback message of the service request to the service function entity 904, so that the service function entity 904 and the visited network device 903 communicate with each other for implementing services. Herein, in practice, the service function entity 904 may be a GMSC or an SMC. The service request may be a call request, a short message request, and a packet data request.

In the communication system of the embodiment of the present invention, a number is stored in a first user data management entity, a mobile station identification number corresponding to the number is stored in a second user data management entity, routing information of the first user data management entity is stored in the second user data management entity, and all service functions of the current cell phones can be realized. In this way, a tight coupling relationship between a card and a number is unlocked, and business halls of an operator need not reserve SIM cards or UIM cards of user data management entities any longer, thereby reducing management cost and management difficulty.

In conclusion, the above descriptions are merely specific embodiments of the present invention. However, the protection scope of the present invention is not limited thereto. Changes or replacements readily apparent to persons skilled in the prior art within the technical scope of the present invention should fall within the protection scope of the present invention. Therefore, the protection scope of the present invention is subject to the appended claims.

## Claims

1. A method for implementing cell phone services, comprising:
storing a number in a first user data management entity; storing a mobile station identification number corresponding to the number in a second user data management entity; and storing routing information of the first user data management entity in the second user data management entity;
receiving, by the second user data management entity, request information from a visited network device; and
forwarding, by the second user data management entity, the request information to the first user data management entity according to the stored routing information of the first user data management entity.

2. The method for implementing cell phone services according to claim 1, wherein the storing the mobile station identification number corresponding to the number in the second user data management entity comprises:
storing an International Mobile Station Identity (IMSI) or a Mobile Identity Number (MIN) in the second user data management entity.

3. The method for implementing cell phone services according to claim 2, wherein the storing the number in the first user data management entity comprises:
storing a Mobile Station International Integrated Services Digital Network (ISDN) Number (MSISDN) or a Mobile Directory Number (MDN) in the first user data management entity, wherein the first user data management entity also stores a mapping relationship between the MSISDN or the MDN and the IMSI or the MIN stored in the second user data management entity.

4. The method for implementing cell phone services according to claim 1, wherein the storing the routing information of the first user data management entity in the second user data management entity comprises:
storing the number in the second user data management entity; or
storing an address of the first user data management entity in the second user data management entity; or
storing an IMSI under administration of the first user data management entity in the second user data management entity.

5. The method for implementing cell phone services according to claim 2, wherein before the receiving, by the second user data management entity, the request information from the visited network device, the method further comprises:
receiving, by the second user data management entity, a verification request from the visited network device; and
returning, by the second user data management entity, a verification response message to the visited network device.

6. The method for implementing cell phone services according to claim 1, wherein the request information comprises:
location update request information or other unstructured supplementary data service information.

7. The method for implementing cell phone services according to claim 1, wherein when the visited network device is a visited Gateway General Packet Radio Service (GPRS) Support Node (GGSN), after the forwarding, by the second user data management entity, the request information to the first user data management entity according to the stored routing information of the first user data management entity, the method further comprises:
returning, by the first user data management entity, address information of a visited Service GPRS Supporting Node (SGSN) to the GGSN; and
establishing, by the GGSN, a connection to the SGSN.

8. The method for implementing cell phone services according to claim 1, wherein the forwarding, by the second user data management entity, the request information to the first user data management entity according to the stored routing information of the first user data management entity comprises:
forwarding, by the second user data management entity, the request information to the first user data management entity according to the stored routing information of the first user data management entity, wherein the second user data management entity does not change a source address of the request information and session information with the network device; or
forwarding, by the second user data management entity, the request information to the first user data management entity according to the stored routing information of the first user data management entity, wherein the second user data management entity reserves session information with the network device, and re-initiates a session with the first user data management entity.

9. A method for implementing cell phone services, comprising:
storing a number in a first user data management entity; storing a mobile station identification number corresponding to the number in a second user data management entity; and storing routing information of the first user data management entity in the second user data management entity;
receiving, by the first user data management entity, a service request from a service function entity; and
sending, by the first user data management entity, a feedback message of the service request to the service function entity, so that the service function entity and a visited network device communicate with each other for implementing services.

10. The method for implementing cell phone services according to claim 9, wherein the storing the mobile station identification number corresponding to the number in the second user data management entity comprises:
storing an International Mobile Station Identity (IMSI) or a Mobile Identity Number (MIN) in the second user data management entity.

11. The method for implementing cell phone services according to claim 10, wherein the storing the number in the first user data management entity comprises:
storing a Mobile Station International Integrated Services Digital Network (ISDN) Number (MSISDN) or a Mobile Directory Number (MDN) in the first user data management entity, wherein the first user data management entity also stores a mapping relationship between the MSISDN or the MDN and the IMSI or the MIN stored in the second user data management entity.

12. The method for implementing cell phone services according to claim 9, wherein the storing the routing information of the first user data management entity in the second user data management entity comprises:
storing the number in the second user data management entity; or
storing an address of the first user data management entity in the second user data management entity; or
storing an IMSI under administration of the first user data management entity in the second user data management entity.

13. The method for implementing cell phone services according to claim 9, wherein when the service request is a call request, the sending the feedback message of the service request to the service function entity, so that the service function entity and the visited network device communicate with each other for implementing the services comprises:
requesting, by the first user data management entity, a roaming number from the visited network device; and
receiving, by the first user data management entity, the roaming number from the visited network device, and returning the roaming number to the service function entity, so that the service function entity initiates a call to the visited network device.

14. The method for implementing cell phone services according to claim 9, wherein when the service request is a short message request, the sending the feedback message of the service request to the service function entity, so that the service function entity and the visited network device communicate with each other for implementing the services comprises:
sending, by the first user data management entity, recorded information of the visited network device and an IMSI or an MIN, to the service function entity, so that the service function entity sends a short message to the visited network device.

15. The method for implementing cell phone services according to claim 9, wherein when the service request is a packet data request, the sending the feedback message of the service request to the service function entity, so that the service function entity and the visited network device communicate with each other for implementing the services comprises:
sending recorded information of the visited network device to the service function entity, so that the service function entity establishes a data connection to the visited network device.

16. A communication system, comprising:
a first user data management entity, configured to store a number; and
a second user data management entity, configured to store a mobile station identification number corresponding to the number, and routing information of the first user data management entity.

17. The communication system according to claim 16, wherein the second user data management entity stores an International Mobile Station Identity (IMSI) or a Mobile Identity Number (MIN), and the routing information of the first user data management entity; and
the first user data management entity stores a Mobile Station International Integrated Services Digital Network (ISDN) Number (MSISDN) or a Mobile Directory Number (MDN), and a mapping relationship between the MSISDN or the MDN and the IMSI or the MIN stored in the second user data management entity.

18. The communication system according to claim 16, wherein the second user data management entity is further configured to receive a verification request sent by a visited network device, and return a verification response message to the visited network device.

19. The communication system according to claim 16, wherein the second user data management entity is further configured to receive request information sent by a visited network device, and forward the request information to the first user data management entity according to the stored routing information of the first user data management entity; and
the first user data management entity is further configured to receive the request information, and return a response message to the visited network device or the second user data management entity.

20. The communication system according to claim 16, wherein the first user data management entity is further configured to receive a service request sent by a service function entity, and send a feedback message of the service request to the service function entity, so that the service function entity and a visited network device communicate with each other for implementing services.
